# EUROPEAN PATENT APPLICATION

(11) **EP 4 160 094 A1**
(43) Date of publication of application: **05.04.2023**
(21) Application number: 20938823.0
(22) Date of filing: 20.10.2020
(51) Int. Cl.: F24B 1/00, F24B 13/00, F24B 13/04, F23B 10/00, F23B 10/02, F23B 50/00

(54) **DOMESTIC/INDUSTRIAL PELLET-BURNING SYSTEM**

(30) Priority: 02.06.2020 CL 20201468
(71) Applicant: Lehue Arévalo, Mario Alejandro Hernan, Puerto Montt (CL)
(72) Inventor: Lehue Arévalo, Mario Alejandro Hernan, Puerto Montt (CL)
(74) Representative: Urizar Anasagasti, Jesus Maria
(86) International application number: PCT/CL2020/050138
(87) International publication number: WO 2021/243476

(57) **Abstract**

The present invention relates to a non-electric, multifunctional, configurable pellet-burning system for domestic and industrial use, which has a removable burner and an inclined hot gas outlet duct that connects said burner of the system with a heat accumulator tank that operates as a second combustion chamber and as a particle filter.

## Description

### Field of Invention

The present invention is related to stoves or heaters, where said multifunction and configurable pellet burning system based on pellets for home and industrial use does not use electricity, it is characterized by having a removable burner and an inclined hot gas outlet tube, which connects the burner of the multifunction pellet burning system that can be configured based on pellets, with a heat storage tank that operates as a combustion chamber and as a particle filter.

### Background of the Invention

Aspects of this invention relates in general to pellet stoves, such stoves fall into two main categories, namely electrically powered pellet stoves and natural draft gravity fed pellet stoves.

Currently, in the case of electric pellet stoves, they require electricity to operate, with the aim of driving the fans that inject the air to produce the flame and extract the combustion gases, in addition to driving the electric motor that feeds the fall of the pellet.

At present, this type of stove operates with an electronic ignition that consists in a movement of an electrical resistance inserted in the stack of pellets, together one of the fans begin to inject air into the chamber where the stack of pellets is located and the electrical resistance, thus initiating the combustion process, while the second fan extracts the gases and fumes resulting from combustion, while the pellet feeder gradually drops the pellets into the combustion chamber. There are models that include a third fan, called convection pellet stoves that blow warm air into spaces or places that need to be heated.

In the state of the art there is a large number of patents related to pellet stoves which use both systems, either electric or natural draft gravity-fed pellet stoves.

There are certain disadvantages related to electric pellet stoves, related to the low caloric energy they deliver, since their approach is more aesthetic than functional, they also have many moving parts and control systems, which make operation and familiarization difficult at first with the device.

Another disadvantage lies in its inoperability when there is a power failure due to a grid fail, or a failure in the distribution network, a malfunction in the electrical system and others. In addition to its lack of utility in isolated, rural areas or where the where the power line does not reach.

The multifunction and configurable pellet burning system based on pellets without the use of electronic components for heating home and industrial use consists of a volume formed by a metal body similar to known combustion systems, in the upper front part, it is located a loading door for the pellet, also in the upper part there is a metal surface to heat food. The ignition and burner chamber are located in the lower front part above the ash accumulator. The smoke outlet is located at the top. The air inlet is located in the lower front part, the air is driven by suction from the combustion chamber, before reaching it, it will travel through the tank and lower the pellets.

The particular objects and advantages of the invention will become apparent to those skilled in the art, that is, those having knowledge or experience in this field of technology, in view of the following description of the invention and the detailed description of certain preferred modalities. Non-electric pellet stoves for home and industrial use are a widely used system.

The advantages of the multifunction and configurable pellet burning system based on pellets without electricity for heating at home and industrial use, lies in its easy operation, natural draft, pellet feeding by gravity, it does not use moving parts, which facilitates its maintenance, its manufacturing cost is lower than existing stoves on the market, the multifunctionality it has when heating and heating food, easy installation, easy cleaning, easy ignition by anyone.

The multifunctional and configurable pellet burning system based on pellets without electricity for home and industrial heating can be installed in any geographical area, in homes, offices, plants, industries, and others. Without the inconvenience of being constantly connected to the grid, they can also replace wood-burning stoves, since it solves pollution problems thanks to its triple combustion burning system, fireplace, gasifiers, and rocket-type heat accumulator, which efficiently burns gases and fumes.

An embodiment of said process and method for the construction and design of said stoves based on pellets is described, for example, in US patent publication 7861707B2, a stove based on pellets that uses gravity feeding and natural draft, burns automatically. more effective and efficient pellet fuel while producing less air pollution and ash.

### Summary of the Invention

An object of the present disclosure is to provide a non-electric, multi-function, configurable pellet burning system for home and industrial use. The proposed solution to these drawbacks is based on the objectives of reducing the consumption of pellets, increasing their caloric capacity, simplifying the use of the stove, solving the problem of smoke and gases caused by the combustion of pellets, and similar to In turn, the functionality of these and other systems that use wood or pellets for combustion, which in addition to heating the environments, provide a surface to heat food, which can also be used in boilers, ovens, kitchens and others.

### Brief Description of the Figures

Figure 1 is a cross-sectional view of the multifunction and configurable pellet burning system based on non-electric pellets according to the present invention.
Figure 2 is a perspective view of the burner of the multifunction and configurable pellet burning system based on non-electric pellets according to the present invention.

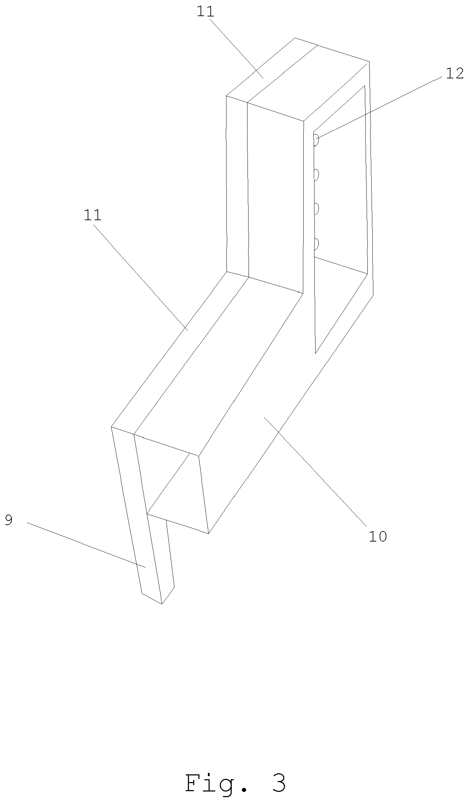

Figure 3 is a side gasification view of the multifunction system that can be configured based on the present invention.

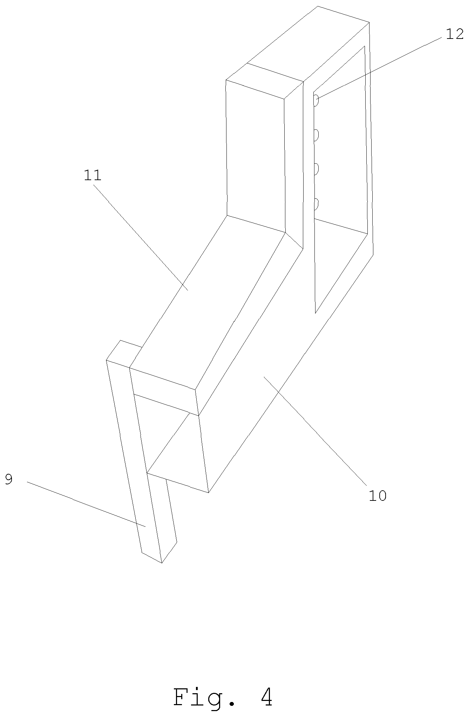

Figure 4 is a top gasification view of the multifunction system that can be configured based on the present invention.

### Detailed Description of the Invention

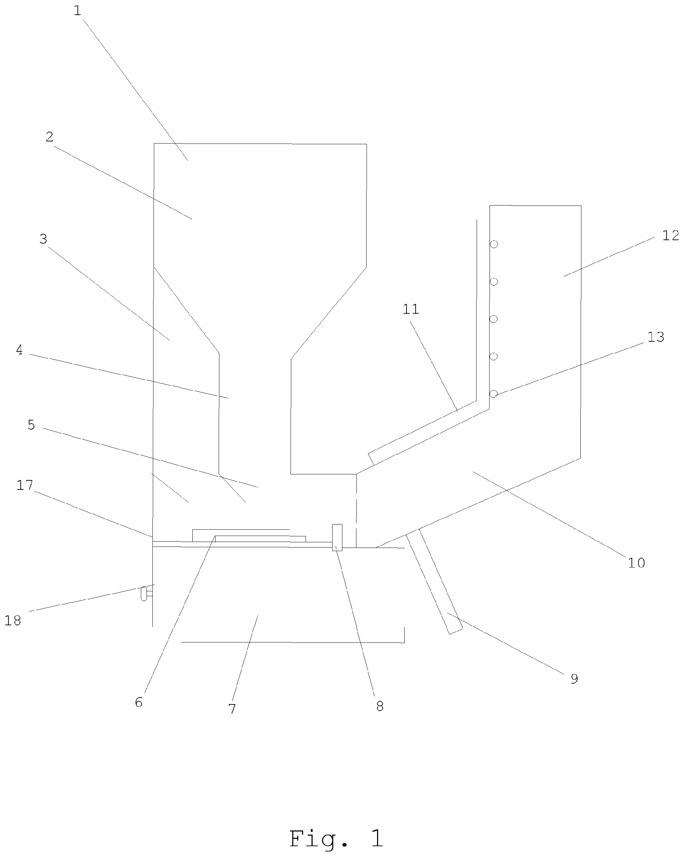

Figure 1, illustrates a sectional view of the system (I), without the use of electronic components for heating home and industrial use, said burning or combustion system (1) comprises a volume formed by a metal body rectangular as a protective casing (not shown in the drawings) which varies according to the application and the model to be used, where said body can have the best suitable shape according to its application or use, whether for boilers, ovens , cookers and other types of stoves, which stands independently on its base. Towards the front face of the protection casing, is located at the lower end of the body a lower front opening for ignition (17) through which, by means of a suitable manual fuel ignition torch, fire-starting tablets or waxes, or any other safe device, the burning system is ignited either as a heater, oven or boiler, or the appropriate system to be used.

The present system additionally incorporates a treatment for the pellets, where said pellets are subjected to a treatment prior to their burning and subsequent re-burning of these, which occurs during combustion inside the chamber's, specifically said pellets are preburned. dried and aerated, prior to entering the combustion chamber, where the pellets will be heated gently, enough to extract moisture without them being burned or toasted, in addition to being ventilated, humidity and air flow They will be led to the first combustion chamber, by means of small perforations located in the path of descent of the pellets (4), these perforations connect the descent or fall of the pellets (4) with the entrance of primary air (3), the primary air is sucked through the combustion chamber, dragging moisture and air from the pellet tank (2), through said perforations, directly into the chamber of combustion, thus allowing to burn the previously treated pellets, these will be heated prior to burning, as a result of the temperature of the burning system (1) in operation, the heat will be conducted to the tank through thermal transmission through the metal.

Under said opening (17), there is a rectangular drawer to collect ashes (7), on its front face the lid of the drawer (18) is located, in the center of which a handle is located which allows said drawer to be pulled out. (7) to receive the ashes and clean it from the dirt there! found.

Towards the upper end of the casing, a rectangular hinged lid is located towards the front face, provided with a handle that allows it to be lifted to load the pellets, inside the pellet tank (2) towards the rear face of said lid. Hinged on the system casing (1), in the most appropriate geometric shape for its application, whether it is a heater, oven or boiler, there is a metal plate in the most appropriate geometric shape for its use, used for cooking or heating food .

The air inlet is located in the lower rear part and can be found in alternate positions.

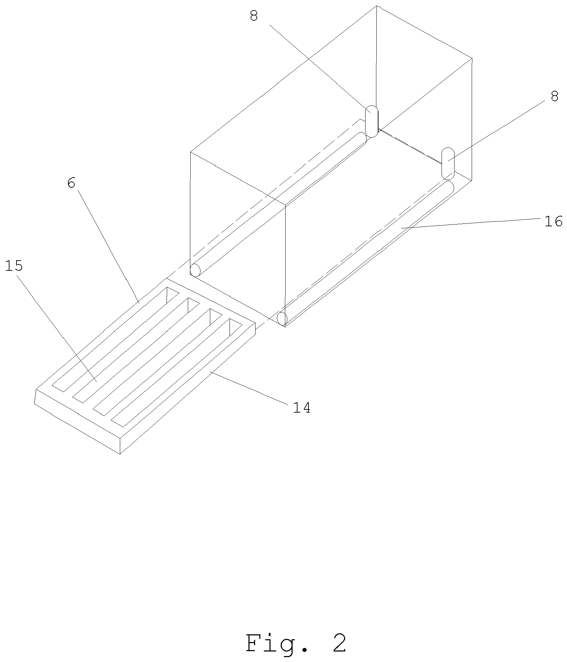

Figure 2, illustrates the burner (6), removable and dismountable, located inside the combustion chamber (A), formed by a rectangular stainless steel plate (14) with high resistance to temperature, with a series of four equidistant rectangular slots (15) 8 mm wide and 100 mm long, which are oriented in the longest direction of the rectangular steel plate as a burner (6), said burner (6) allows the free and controlled fall of the ashes and pellets already burned in the combustion.

Said burner (6) is located centrally with the fall of the pellet tank (2) see figure 1.

The burner (6), at the time of burning the pellets, produces gases and flames which rise through a conduit for the outlet of hot gases with an inclined square section (10) or in any other suitable way, which forms part from the combustion chamber, said duct, which additionally allows the flames to pass, rises at an angle thus allowing the directing and strengthening of the flames and burning of the pellets.

The pellet system (1) comprises a first combustion chamber (5) where the home or burner (6) is located, the second combustion chamber (10) corresponds to the duct for the exit of hot gases, said second combustion chamber, is covered or lined by means of metallic laminae around its faces as gasifying jackets and the third is the chamber where the burning of gases resulting from the two preceding processes will be derived and conducted.

Said gasifying jackets (11), located in required areas attached to the conduit for the exit of hot gases for the evacuation of the flames, which cause gasification inside said jackets (11), injecting the resulting gas into the flow of flames upward. The cold air inlet or secondary air (9) is located in the lower part of the combustion chamber, said inlet is located in the downward direction of the combustion chamber, thus avoiding the return (flashback) or micro gas explosions, this intake of cold or secondary air (9) allows said cold air to be conducted into the gasification jackets (11) for subsequent heating and transformation into gases.

As can be seen in figure 1, in section (10) in the zone that ascends vertically from the combustion chamber, a series of equidistant gasification perforations (12) are located, oriented vertically, for the entrance of the flames generated by the gasification. Towards the front face of this section that ascends vertically, there is a rectangular perforation (not shown in the figures), oriented vertically, as a window (optional) covered by tempered glass, which allows to observe the flames inside the combustion chamber.

Said conduit for the outlet of hot gases with an inclined square section in turn acts as ashes return, which fall by gravity to the previously mentioned ash drawer (7).

In the figure it can be seen that the conduit for the exit or evacuation of hot gases with an inclined square section (10), connects the burner (6) with the third combustion chamber, where the particulate material product of the combustion is filtered and decanted, additionally accumulates heat and improves the burning of residual gases thanks to the circulation of flames and gases, which allows an upper metal plate for heating or cooking food or multiple function area, located on the surface of the shell, is heated giving the possibility of being used for cooking food. In the first place, the gases do not leave the chamber vertically, as they do in other conventional stoves through which the residual gases of combustion are evacuated.

Additionally, the possibility must be added that the angle of inclination, for the exit of hot gases, is variable, depending on the use or model for which it will be used. Likewise, as can be seen in figure 2, inside the combustion chamber (A), guide devices (16) and cylindrical-shaped elements as stops (8) are located, to guide and secure in position definitely the burner (6) inside the duct for the exit of hot gases from the combustion chamber.

The cold air inlet tube (3) brings air from the outside, to first circulate through the pellet tank (2), and then descend through the downdraft or pellet drop inlet tube (4), until descending to the burner (6), dragging in turn the smoke that tries to ascend through the pellet tank (2), thus producing the descending draft.

The third combustion chamber may additionally have any suitable geometric shape, making it possible to use it for any purpose that industrial processes require, such as ovens, boilers, grills, and others.

The multifunctional and configurable pellet burning system based on non-electric pellets (1) according to the present invention incorporates an anti-inflammation system for the ducts or pipes, after having conducted tests for a few months and simulating ignition events that do not result in a fire, the system threatened and shut down the equipment, minimizing the risk of fire.

This system consists of having an efficient combustion chamber of reduced dimensions, located in the functional center of the system, between the primary air inlet (3) and the inclined gas evacuation duct (10), the combustion in the Inside this chamber, once the ignition has been carried out, it will be the product of the depression in the ducts or pipes for the exit of gases, the combustion chamber will not be able to suck air on its own, but rather, without depression in the pipes, the suction necessary for burning the pellets will not be produced and without the entry of primary air, there is no depression inside the pipes or ducts, therefore, combustion will not be possible. In the event of a blockage or obstruction in the pipes, the flow of fluids (air, gases, flames, smoke) is automatically stopped. The primary air inlet (3) is produced indirectly, through a siphon-type system, controlling the air inlet necessary for the combustion of pellets or other fuel.

Therefore, while novel features have been shown, disclosed, and described, it will be understood that omissions, substitutions, and changes in form and detail may be made from what is illustrated by those skilled in the art without departing from the spirit and scope of the specification invention.

The specification, examples, and data above provide a complete description of the structure and use of exemplary implementations of the invention. Since many implementations of the invention can be made without departing from the spirit and scope of the invention, the invention resides in the appended claims. Additionally, the structural features of the different implementations may be combined in another implementation without departing from the cited claims. While embodiments and applications of this invention have been shown and described, it will be apparent to those skilled in the art having the benefit of this disclosure that many more modifications than previously mentioned are possible without departing from the inventive concepts of the present invention. The invention, therefore, is not restricted except in the spirit of the appended claims.

## Claims

1. A non-electric multifunction and configurable pellet burning system based on pellets (1) for home and industrial use, comprising a volume formed by a generally rectangular metal body as a protective casing, its shape being able to vary according to its application or model, comprising a removable burner (6) and an inclined hot gas outlet tube (10), which connects the burner (6), of the system (1) with a heat accumulator tank that operates as a third combustion chamber and as a particle filter, where on its rear surface, a location that depends on the model and application such as boilers, ovens and others, a metal plate is located in the most appropriate way for its use, the which can be used for heating food, currently pellet stoves are used in most cases based on electricity for its operation, which become inoperable at the time of and lack of electricity or lack of it, additionally being impossible to install in rural areas, wherein said system (1), is based on the objectives of reducing the consumption of pellets, increasing its caloric capacity, solving the problem of smoke and gases caused by the combustion of pellets through efficient design combustion chambers, and that is similar in turn, with functionality such as boiler, stoves, ovens and other appliances that use wood for combustion, which in addition to heat environments, provide a surface for heating or cooking food.

2. The non-electric multifunction and configurable pellet burning system based on pellets, according to claim 1, wherein the system additionally incorporates a treatment for the pellets, where said pellets are subjected to a treatment prior to burning of these and subsequent re-burning of these, which occurs during combustion inside the chambers, specifically said pellets are pre-dried and aerated, prior to entering the combustion chamber, where the pellets will be gently heated, enough to extract moisture without burning or toasting them.

3. The non-electric multifunction and configurable pellet burning system based on pellets, according to claim 2, wherein in addition to being ventilated, the humidity and the air flow will be conducted towards the first combustion chamber, by means of small perforations located in the path of descent of the pellets (4), these perforations connect the descent or fall of the pellets (4) with the primary air inlet (3), the primary air is sucked through the chamber of combustion, dragging moisture and air from the pellet tank (2), through said perforations, directly towards the combustion chamber, thus allowing the previously treated pellets to burn, these will be heated prior to burning, as a result of the temperature from the burning system (1) in operation, the heat will be conducted to the tank through thermal transmission through the metal.

4. The non-electric multifunction and configurable pellet burning system based on pellets, according to claim 3, wherein under said opening (17), there is a box for collecting ashes (7) rectangular in shape, in its front face is the lid of the drawer (18), in its center is located a handle which allows removing said drawer (7) in order to receive the ashes and subsequently clean said drawer.

5. The non-electric multifunction and configurable pellet burning system based on pellets, according to claim 4, wherein the upper end of the most suitable casing according to its use, that is, heater, oven, boiler or other, a hinged lid is located so as to allow said lid to be opened and closed, which allows the loading of the pellets for the combustion of the most appropriate system.

6. The non-electric multifunction and configurable pellet burning system based on pellets, according to claim 5, wherein towards the rear face of the most appropriate casing according to its use, a metal plate of the most suitable geometric shape for its use, used for cooking or heating food.

7. The non-electric multifunction and configurable pellet burning system based on pellets, according to claim 6, wherein the system's air inlet (1), can be found located in alternate positions, according to the model.

8. The non-electric multifunction and configurable pellet burning system based on pellets, according to claim 7, wherein inside the combustion chamber (A), a removable burner (6) is positioned and removable, made up of a stainless-steel rectangular plate (14) with high temperature resistance, with a series of four equidistant rectangular slots (15) 8 mm wide and 100 mm long, which are oriented in the most

9. The non-electric multifunction and configurable pellet burning system based on pellets, according to claim 8, wherein said burner (6), at the time of burning the pellets, produces gases and flames which amount to through a conduit for the outlet of hot gases with an inclined square section (10) or in any other suitable way, which is part of the combustion chamber, said conduit, which additionally allows the flames to pass, rises at an angle allowing thus directing and enhancing the flames and burning of the pellets.

10. The non-electric multifunction and configurable pellet burning system based on pellets, according to claim 9, wherein said pellet system (1) comprises a first combustion chamber (5) where the home or burner (6), the second combustion chamber (10) corresponds to the conduit for the exit of hot gases, said second combustion chamber (10), is covered or lined by means of metal sheets around its faces as gasifier jackets (11) and the third is the chamber where the burning of gases resulting from the two preceding processes will be derived and conducted.

11. The non-electric multifunction and configurable pellet burning system based on pellets, according to claim 10, wherein said gasifying jackets (11), located in required areas attached to the duct for the outlet of hot gases for the evacuation of the flames, which cause gasification inside said jackets (11), injecting the resulting gas into the ascending flow of flames.

12. The non-electric multifunction and configurable pellet burning system based on pellets, according to claim 11, wherein towards the bottom of the combustion chamber, the cold air inlet or secondary air (9), located downstream of the combustion chamber in order to avoid flashback or return, that is, the micro explosion of the gas, said inlet (9) allows cold air to be conducted into the gasification jackets (11).

13. The non-electric multifunction and configurable pellet burning system based on pellets, according to claim 12, wherein section (10) in the area where the duct rises vertically from the combustion chamber, a series of equidistant gasification perforations (12) are located, oriented vertically, for the entrance of the flames generated by the gasification, towards the front face of this section that ascends vertically, a rectangular perforation is located oriented in the vertical direction. vertical direction as an optional window.

14. The non-electric multifunction and configurable pellet burning system based on pellets, according to claim 13, wherein said conduit for the outlet of hot gases with an inclined square section in turn serves for the return of the ashes, which fall by gravity to the ash drawer (7) previously mentioned.

15. The non-electric multifunction and configurable pellet burning system based on pellets, according to claim 14, wherein said duct (10) connects the burner (6) with the third combustion chamber, where the particulate material combustion product is filtered and decanted, additionally it accumulates heat and improves the burning of residual gases thanks to the circulation of flames and gases, which allows an upper metal plate for heating or cooking food or multiple function area, located on the surface of the casing, is heated giving the possibility of being used for cooking food.

16. The non-electric multifunction and configurable pellet burning system based on pellets, according to claim 15, wherein the combustion chamber (A), guide devices (16) and cylindrical elements are located at way of stops (8), to guide and secure the burner (6) in its final position inside the duct for the exit of hot gases from the combustion chamber.

17. The non-electric multifunction and configurable pellet burning system based on pellets, according to claim 16, wherein the cold air intake tube (3), brings the air from the outside, stops first circulate through the pellet tank (2), to then descend through the downdraft inlet tube or pellet descent (4), until descending to the burner (6), dragging in turn the smoke that tries to ascend through of the pellet tank (2), thus producing the downdraft.

18. The non-electric multifunction and configurable pellet burning system based on pellets, according to claim 17, wherein the third combustion chamber may additionally have any suitable geometric shape, making it possible to use it for any purpose that industrial processes require, such as ovens, boilers, grills, and others.

19. The non-electric multifunction and configurable pellet burning system based on pellets, according to claim 18, wherein said system (1) incorporates an anti-inflammation system of ducts, where said system consists in that by having an efficient and small-sized combustion chamber, located in the functional center of the system, between the primary air inlet (3) and the inclined gas evacuation duct (10), the combustion inside this chamber, once the ignition is done, it will be the product of the depression in the ducts or pipes for the gas outlet.

20. The non-electric multifunction and configurable pellet burning system based on pellets, according to claim 19, wherein in the event of a blockage or obstruction in the pipes of the system (1), the flow of fluids (air, gases, flames, fumes) is automatically stopped and the entry of primary air (3) is produced indirectly, through a siphon-type system, controlling the entry of air necessary for the combustion of pellets or other fuel.
